# EUROPEAN PATENT APPLICATION

(11) **EP 4 794 289 A1**
(43) Date of publication of application: **19.08.2026**
(21) Application number: 26156814.1
(22) Date of filing: 06.02.2026
(51) Int. Cl.: H04L 41/22, H04L 43/045, H04W 24/04

(54) **GATEWAY DEVICE, NON-TRANSITORY COMPUTER-READABLE RECORDING MEDIUM, AND INFORMATION PROCESSING METHOD**

(30) Priority: 18.02.2025 JP 2025024334
(71) Applicant: KYOCERA Document Solutions Inc., Osaka-shi, Osaka 540-8585 (JP)
(72) Inventor: ARAKAWA, Hiroki, Osaka-shi, 540-8585 (JP)
(74) Representative: IPAZ

(57) **Abstract**

A gateway device is connected between a server device and at least one of one or more client devices for the server device and monitors the one or more client devices, the server device and the one or more client devices being connected to each other via a network, the gateway device including a control circuit that displays a GUI on a display device, the GUI displaying a troubleshooting button for starting troubleshooting of a target client device that is one of the client devices, and starts the troubleshooting of the target client device when the troubleshooting button is operated by a user.

## Description

### Incorporation by Reference

This application claims the benefit of Japanese Priority Patent Application JP 2025-024334 filed February 18, 2025, the entire contents of which are incorporated herein by reference.

### Field

The present disclosure relates to a gateway device that is connected between a server device and a client device, a non-transitory computer-readable recording medium on which a gateway program is recorded, and an information processing method.

### Background

There is known a gateway device that is connected between a server device and a client device and monitors the client device. The server device provides a client application. The client application is installed on the client device.

### Summary

It is conceivable that problems related to the connection of the gateway device occur (e.g., the client device fails to connect to the server device, and a counter value cannot be obtained). To cope with those problems, in many cases, it is necessary to contact the provider of the client application, which requires a considerable amount of time. If a diagnostic result and troubleshooting of the client device can be checked on the gateway device, it is expected to enable service personnel to solve the connection problems on site and reduce the time spent on inquiries.

In view of the circumstances as described above, it is desirable to provide a diagnostic result and troubleshooting of the client device on the gateway device.

A gateway device according to an embodiment of the present disclosure is connected between a server device and at least one of one or more client devices for the server device and monitors the one or more client devices, the server device and the one or more client devices being connected to each other via a network, the gateway device including a control circuit that displays a GUI on a display device, the GUI displaying a troubleshooting button for starting troubleshooting of a target client device that is one of the client devices, and starts the troubleshooting of the target client device when the troubleshooting button is operated by a user.

A gateway program recorded on a non-transitory computer-readable recording medium according to another embodiment of the present disclosure causes a control circuit of a gateway device, which is connected between a server device and at least one of one or more client devices for the server device and monitors the one or more client devices, the server device and the one or more client devices being connected to each other via a network, to execute: displaying a GUI on a display device, the GUI displaying a troubleshooting button for starting troubleshooting of a target client device that is one of the client devices; and starting the troubleshooting of the target client device when the troubleshooting button is operated by a user.

An information processing method according to another embodiment of the present disclosure includes: when a control circuit of a gateway device, which is connected between a server device and at least one of one or more client devices for the server device and monitors the one or more client devices, the server device and the one or more client devices being connected to each other via a network, executes a gateway program, displaying a GUI on a display device, the GUI displaying a troubleshooting button for starting troubleshooting of a target client device that is one of the client devices; and starting the troubleshooting of the target client device when the troubleshooting button is operated by a user.

These and other objects, features and advantages of the present disclosure will become more apparent in light of the following detailed description of best mode embodiments thereof, as illustrated in the accompanying drawings.

### Brief Description of Figures

Fig. 1 shows a network system configuration including a gateway device according to an embodiment of the present disclosure;
Fig. 2 shows a hardware configuration of the gateway device;
Fig. 3 shows a hardware configuration of a client device;
Fig. 4 shows an operation flow of the gateway device;
Fig. 5 shows a GUI (menu bar) of the gateway device;
Fig. 6 shows a GUI (diagnostic and troubleshooting screen) of the gateway device;
Fig. 7 shows a GUI (diagnostic result screen) of the gateway device;
Fig. 8 shows a GUI (troubleshooting guide screen) of the gateway device;
Fig. 9 shows a GUI (communication setting screen) of the gateway device; and
Fig. 10 shows a GUI (target client device setting screen) of the gateway device.

### Detailed Description

Hereinafter, an embodiment of the present disclosure will be described with reference to the drawings.

### 1. Network System Configuration

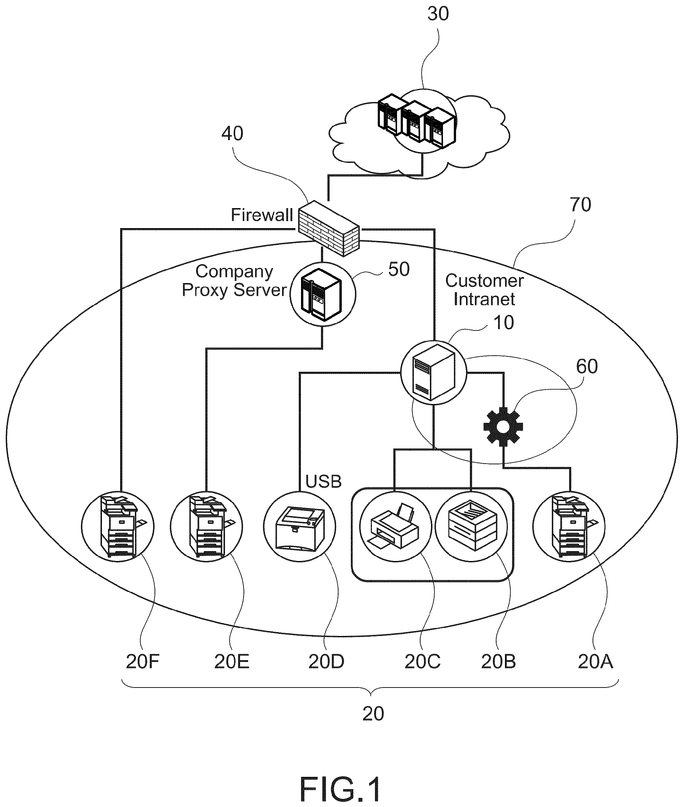

Fig. 1 shows a network system configuration including a gateway device according to an embodiment of the present disclosure.

A server device 30 provides a client application to client devices 20. The server device 30 is connected to a firewall 40. The firewall 40 is the most upstream device in a customer intranet 70 to which the client application is provided. A gateway device 10 and a company proxy server 50 are connected to the firewall 40 on the downstream thereof. A proxy server 60 is connected to the gateway device 10 on the downstream thereof.

The client devices 20 are electronic devices used by customer end users and are, for example, image forming devices such as multifunction peripherals (MFPs). The client devices 20 have the following types, for example. A client device 20A is connected to the proxy server 60 on the downstream of the gateway device 10. A client device 20B is a device of another company and is connected to the gateway device 10. A client device 20C is a legacy device and is connected to the gateway device 10. A client device 20D is connected to the gateway device 10 via a USB, not a network. A client device 20E is connected to the company proxy server 50. A client device 20F is connected to the firewall 40.

The gateway device 10 is connected between the server device 30 and at least one of one or more client devices 20 (client devices 20A to 20D) for the server device 30, the server device 30 and the one or more client devices 20 being connected to each other via a network. The gateway device 10 monitors the client devices 20 (all the client devices 20A to 20F) in cooperation with the server device 30. The gateway device 10 is an information processing device (personal computer or the like), on which a gateway application is installed and which executes the gateway application, and is used by a person in charge on a customer end (user).

### 2. Hardware Configuration of Gateway Device

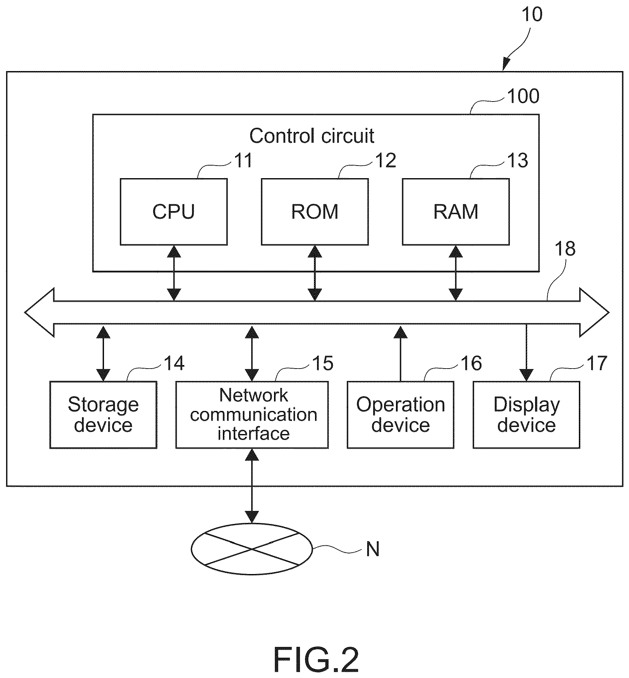

Fig. 2 shows a hardware configuration of the gateway device.

The gateway device 10 includes a central processing unit (CPU) 11, a read only memory (ROM) 12, a random access memory (RAM) 13, a large-capacity, nonvolatile storage device 14 such as a hard disk drive (HDD) or a solid state drive (SSD), a network communication interface 15, an operation device 16, a display device 17, and a bus 18 that connects those above components to each other.

The CPU 11, the ROM 12, and the RAM 13 constitute a control circuit 100. The CPU 11 loads an information processing program stored in the ROM 12 to the RAM 13 and executes the information processing program. The ROM 12 fixedly stores programs, data, and the like to be executed by the CPU 11. The ROM 12 is an example of a non-transitory computer-readable recording medium.

### 3. Hardware Configuration of Client Device

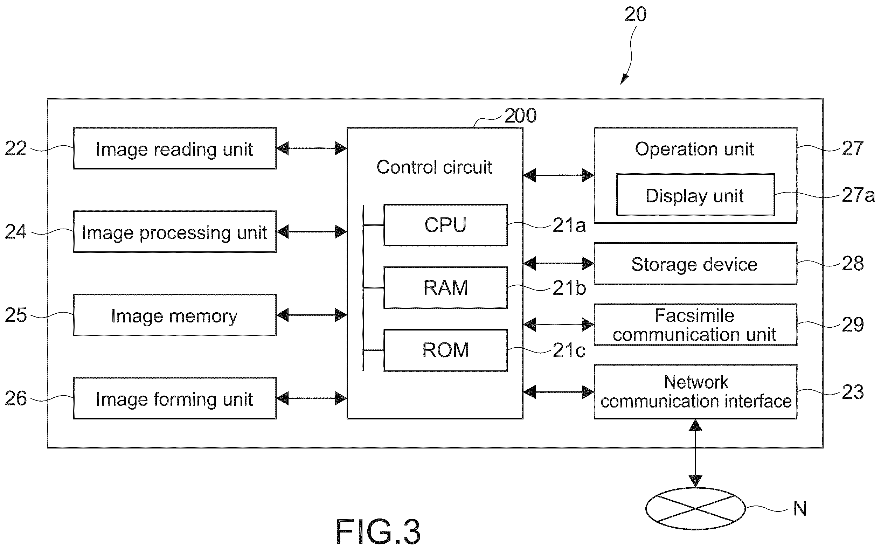

Fig. 3 shows a hardware configuration of the client device.

An image forming device that is the client device 20 includes a control circuit 200 constituting a computer. The control circuit 200 includes a CPU 21a as a processor, a RAM 21b, a ROM 21c as a memory, a dedicated hardware circuit, and the like and controls the overall operation of the image forming device 20. The CPU 21a loads an information processing program stored in the ROM 21c to the RAM 21b and executes the information processing program, thus executing the operation to be described in the following operation flow and controlling the display and input of an operation on a touch panel 27. The ROM 21c fixedly stores programs, data, and the like to be executed by the CPU 21a. The ROM 21c is an example of a non-transitory computer-readable recording medium.

The control circuit 200 is connected to an image reading unit 22 (image scanner), an image processing unit 24 (including a graphics processing unit (GPU)), an image memory 25, an image forming unit 26 (printer), a touch panel (front panel) 27 as an operation unit including a display unit 27a, a large-capacity, nonvolatile storage device 28 such as an HDD or an SSD, a facsimile communication unit 29, a network communication interface 23 (communication unit), and the like. The control circuit 200 controls the operations of the respective connected units or transmits and receives signals or data to and from the units. The operation unit of the touch panel 27 is an example of an input device, and a sound input device including a microphone may be provided as the input device.

### 4. Operation of Gateway Device

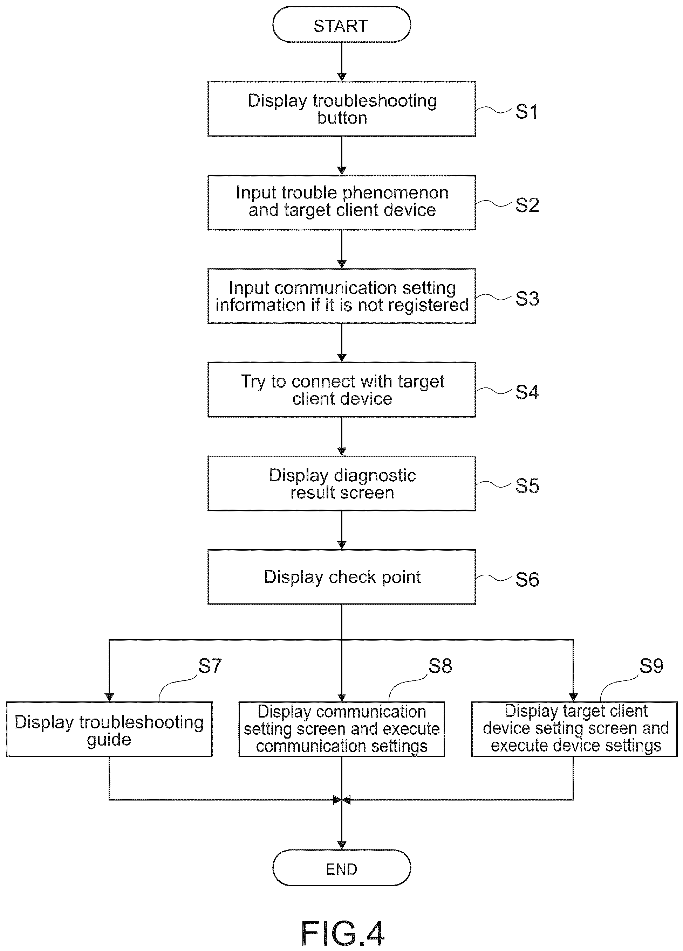

Fig. 4 shows the operation flow of the gateway device.

It is conceivable that problems related to the connection of the gateway device 10 occur (e.g., the client device 20 fails to connect to the server device 30, and a counter value cannot be obtained). To cope with those problems, in many cases, it is necessary to contact the provider of the client application, which requires a considerable amount of time. In this regard, in this embodiment, the control circuit 100 of the gateway device 10 executes a gateway program to execute troubleshooting, thus making it possible to check a diagnostic result and troubleshooting of the client device 20 on the gateway device 10. Thus, it is expected to enable service personnel to solve the connection problems on site and reduce the time spent on inquiries.

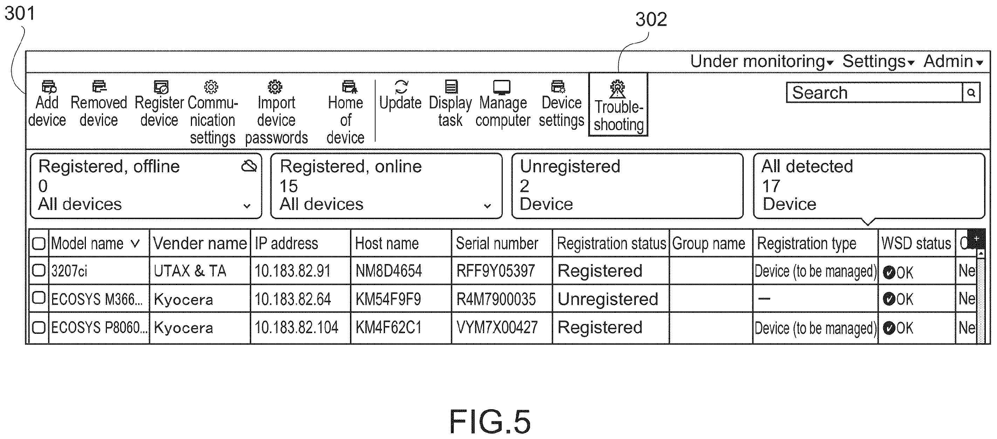

Fig. 5 shows a GUI (menu bar) of the gateway device.

The control circuit 100 displays a GUI 300 for manager on the display device 17. The GUI 300 includes a menu bar 301. The menu bar 301 displays a troubleshooting button 302. The troubleshooting button 302 is a button for starting troubleshooting of a single client device 20 (referred to as target client device 20) in which a trouble phenomenon has occurred. When the troubleshooting button 302 is operated by the user, the control circuit 100 starts diagnostic and troubleshooting of the target client device 20 (Step S1).

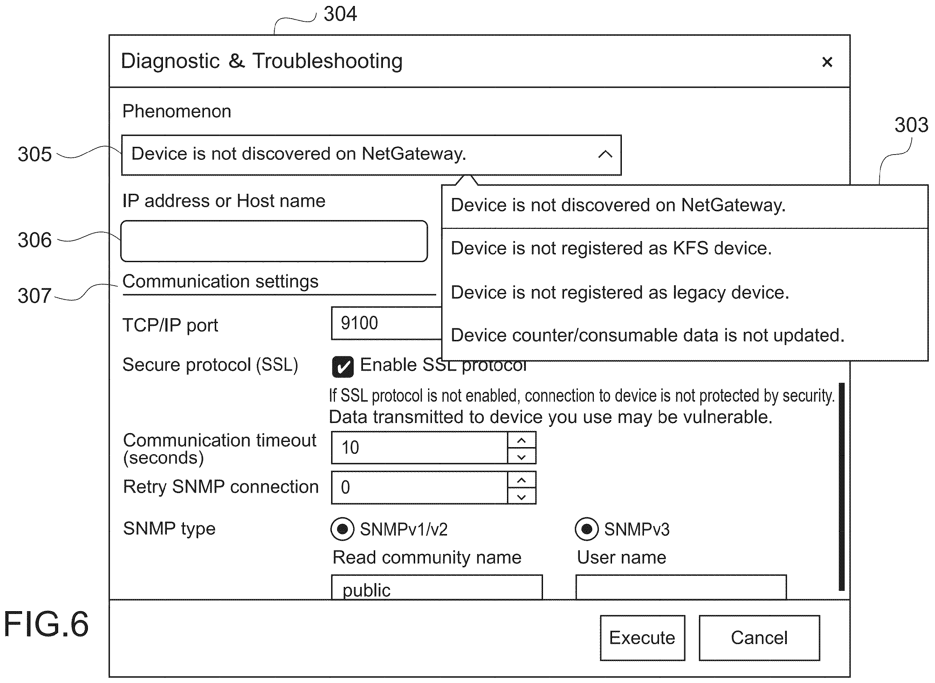

Fig. 6 shows a GUI (diagnostic and troubleshooting screen) of the gateway device.

When starting troubleshooting, the control circuit 100 displays a diagnostic and troubleshooting screen 304 on the GUI 300. The diagnostic and troubleshooting screen 304 includes a trouble phenomenon selection section 305 and a target client device input section 306.

The trouble phenomenon selection section 305 displays a pull-down list 303 of trouble phenomena. Options in the list 303 of trouble phenomena are determined in advance. For example, the trouble phenomena such as "Device is not discovered on gateway.", "Device is not registered in server device.", "Device is not registered as legacy device.", and "Device counter or consumables data is not updated." are displayed in the list 303. The trouble phenomenon selection section 305 prompts the user to select, from the list 303, one trouble phenomenon that has occurred in the target client device 20.

The target client device input section 306 prompts the user to input identification information for identifying the target client device 20 in which the trouble phenomenon has occurred. The identification information for identifying a target client device 20 is, for example, an IP address or a host name. A trouble phenomenon that can be selected by the user on the diagnostic and troubleshooting screen 304 is only one, and the target client device 20 that can be input by the user is only one (Step S2).

The control circuit 100 determines whether or not communication setting information of the target client device 20 identified with the identification information (IP address or host name) input to the target client device input section 306 is registered in the gateway device 10. The communication setting information refers to the settings necessary for the client device 20 and the gateway device 10 to communicate with each other, and the gateway device 10 stores the communication setting information for each of the client devices 20 to be monitored. If the communication setting information is not registered, the control circuit 100 displays on the GUI 300 a communication setting information input section 307 for prompting the user to input the communication setting information. The control circuit 100 typically displays the initial values of the communication settings in the communication setting information input section 307 (Step S3).

If the communication setting information is registered in the gateway device 10, the control circuit 100 does not display the communication setting information input section 307, and tries to connect to the target client device 20 using the registered communication setting information. If the communication setting information is not registered, the control circuit 100 tries to connect to the target client device 20 using the communication setting information that has been input to the communication setting information input section 307 (Step S4).

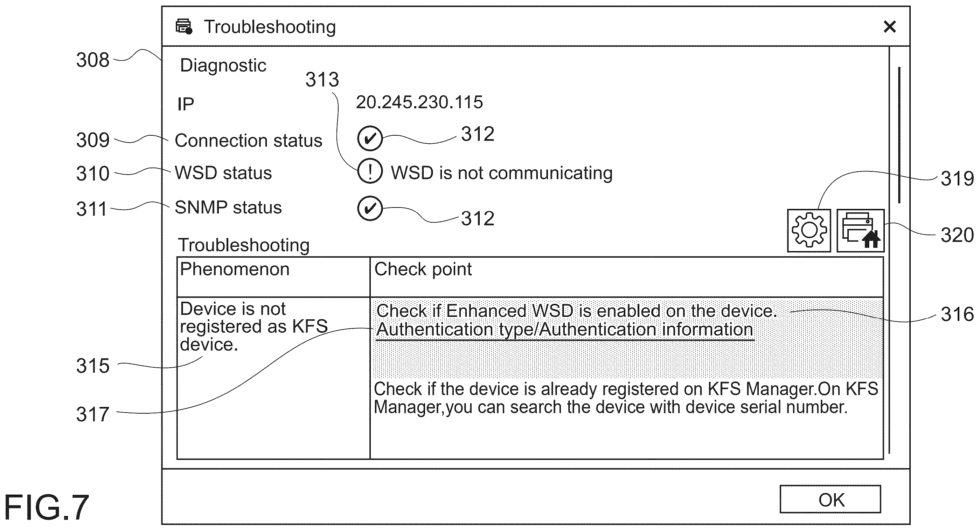

Fig. 7 shows a GUI (diagnostic result screen) of the gateway device.

The control circuit 100 tries to connect to the target client device 20 using the communication setting information, thus obtaining diagnostic results of the communication status and displaying on the GUI 300 a diagnostic result screen 308 showing the diagnostic results. The diagnostic result screen 308 further includes a communication setting button 319 and a target client device setting button 320. The communication status includes a connection status and a protocol status. Diagnostic targets are three types of a connection status 309 (PING), and a WSD status 310 and an SNMP status 311 as protocol statuses. SNMP and WSD are protocols for monitoring and managing a network device (client device 20) supported by the gateway device 10. The control circuit 100 displays an OK mark 312 if there is no problem in a diagnostic result, or displays an alert mark 313 and error contents 314 if there is a problem (Step S5).

The control circuit 100 displays, on the GUI 300, a check point 316 (Check if Enhanced WSD is enabled on the client device) for troubleshooting corresponding to the selected trouble phenomenon 315 (Device is not registered in the server device) in the diagnostic result screen 308. The check point 316 to be displayed is determined in advance for each trouble phenomenon 315 (Step S6).

If the communication status (connection status and/or protocol status) has a problem (has the alert mark 313), the control circuit 100 highlights and displays on the GUI 300 the check point 316 for the troubleshooting corresponding to the communication status (e.g., changes the background color), and prompts the user to check the check point 316. The control circuit 100 displays a link 317 for displaying procedure information of the troubleshooting in at least part of the check point 316.

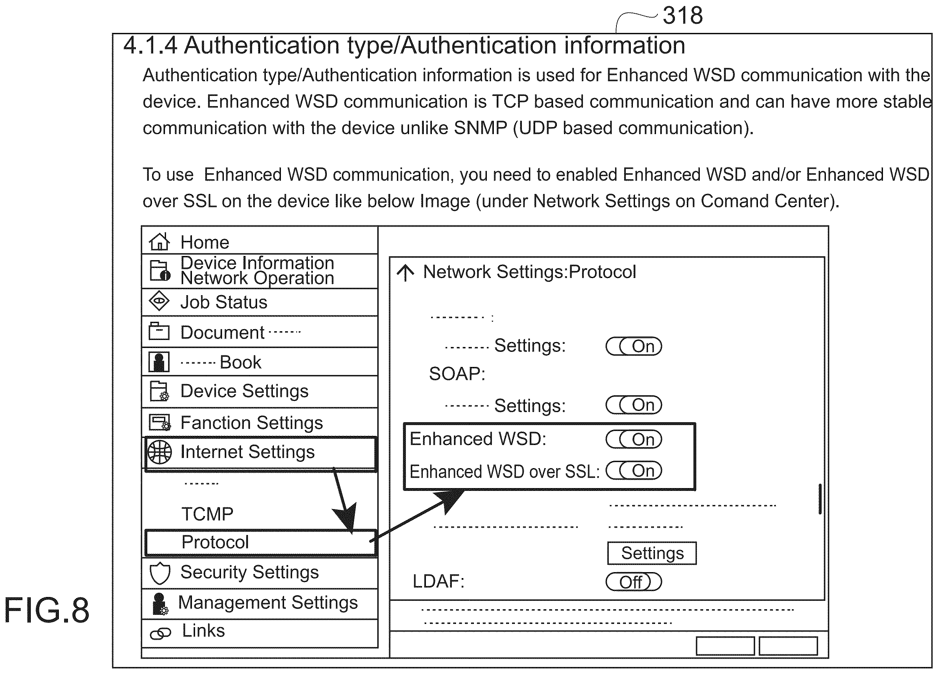

Fig. 8 shows a GUI (troubleshooting guide screen) of the gateway device.

When the link 317 is operated (e.g., clicked) by the user, the control circuit 100 displays on the GUI 300 a troubleshooting guide 318 showing the procedure information of the troubleshooting, which is stored in the location indicated by the link 317 (Step S7). For example, the troubleshooting guide 318 is a PDF document and automatically jumps to an appropriate chapter for display. The troubleshooting guide 318 is included in the gateway device 10.

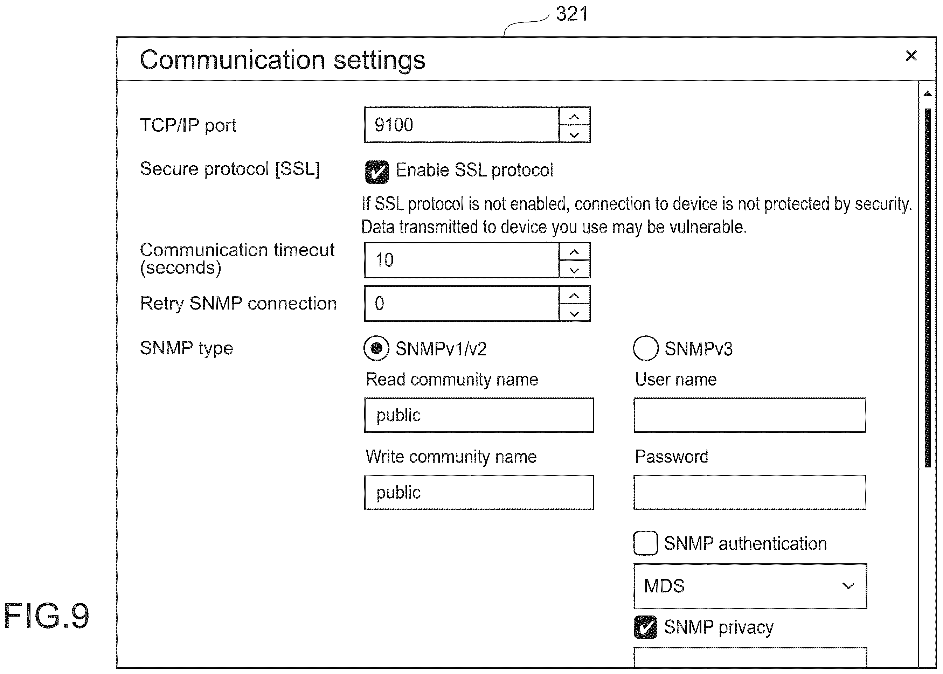

Fig. 9 shows a GUI (communication setting screen) of the gateway device.

The communication setting button 319 is a button for transiting to a communication setting screen 321 for executing the troubleshooting of the communication status. When the communication setting button 319 is operated by the user, the control circuit 100 displays the communication setting screen 321 of the target client device 20 on the GUI 300 and executes communication settings of the target client device 20 according to the user's operation on the communication setting screen 321 (Step S8). Note that the control circuit 100 displays the communication setting button 319 in a grayed-out manner if the target client device 20 is not registered in the gateway device 10.

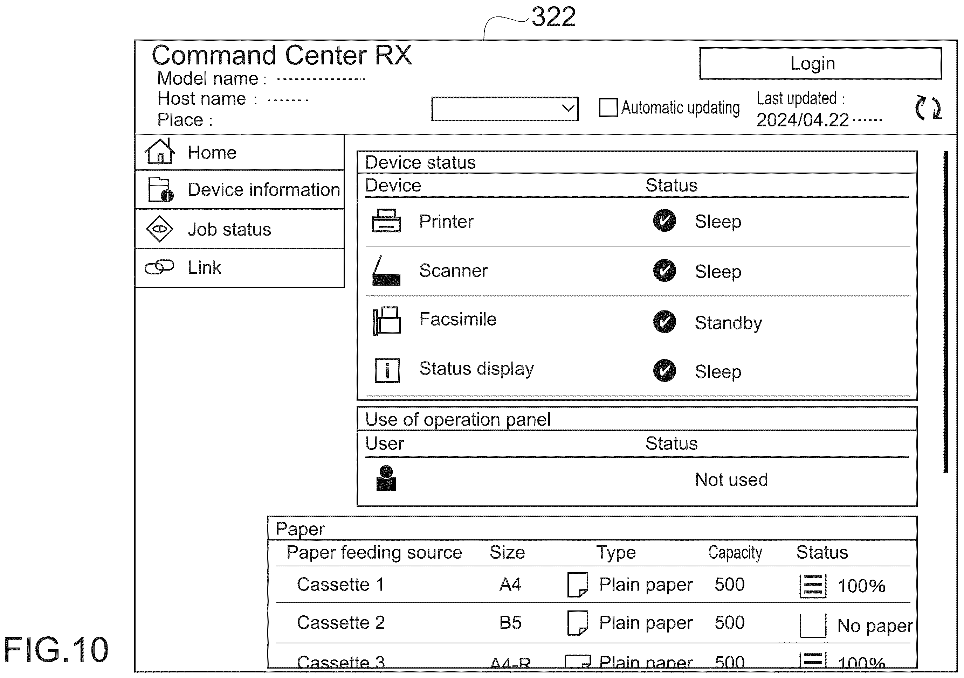

Fig. 10 shows a GUI (target client device setting screen) of the gateway device.

The target client device setting button 320 is a button for transiting to a target client device setting screen 322 for executing the troubleshooting of the target client device 20. When the target client device setting button 320 is operated by the user, the control circuit 100 displays the target client device setting screen 322 of the target client device 20 on the GUI 300 and executes device settings of the target client device 20 according to the user's operation on the target client device setting screen 322 (Step S9).

It is conceivable that problems related to the connection of the gateway device 10 occur (e.g., the client device 20 fails to connect to the server device 30, and a counter value cannot be obtained). To cope with those problems, in many cases, it is necessary to contact the provider of the client application, which requires a considerable amount of time. In this regard, in this embodiment, the transition of the GUI 300 makes it possible to easily, intuitively, and reliably check the diagnostic results and troubleshooting of the client device 20 on the gateway device 10. Thus, it is expected to enable service personnel to solve the connection problems on site and reduce the time spent on inquiries without relying on the ability of individual service personnel.

Although each embodiment and each modified example of the present technology have been described above, the present technology is not limited to the above-mentioned embodiments, and various modifications can be made without departing from the gist of the present technology as a matter of course.

## Claims

1. A gateway device (10) that is connected between a server device (30) and at least one of one or more client devices (20) for the server device (30) and monitors the one or more client devices (20), the server device (30) and the one or more client devices (20) being connected to each other via a network, the gateway device (10) comprising
a control circuit (100) that displays a GUI (300) on a display device (17), the GUI (300) displaying a troubleshooting button for starting troubleshooting of a target client device (20) that is one of the client devices (20), and starts the troubleshooting of the target client device (20) when the troubleshooting button is operated by a user.

2. The gateway device (10) according to claim 1, wherein
the control circuit (100) displays on the GUI (300), when starting the troubleshooting,
a trouble phenomenon selection section (305) that displays a list of trouble phenomena and prompts the user to select one trouble phenomenon that has occurred in the target client device (20) from the list, and
a target client device input section (306) that prompts the user to input identification information for identifying the target client device (20) in which the trouble phenomenon has occurred.

3. The gateway device (10) according to claim 2, wherein
the control circuit (100)
determines whether or not communication setting information of the target client device (20) identified with the identification information input to the target client device input section (306) is registered,
tries, if the communication setting information is registered, to connect to the target client device (20) using the registered communication setting information, and
displays, if the communication setting information is not registered, on the GUI (300) a communication setting information input section (307) that prompts the user to input the communication setting information and tries to connect to the target client device (20) using the input communication setting information.

4. The gateway device (10) according to claim 3, wherein
the control circuit (100) tries to connect to the target client device (20) using the communication setting information to obtain a diagnostic result of a communication status including a connection status and/or a protocol status and display the diagnostic result on the GUI (300).

5. The gateway device (10) according to claim 4, wherein
the control circuit (100) displays on the GUI (300) a check point for the troubleshooting corresponding to the selected trouble phenomenon.

6. The gateway device (10) according to claim 5, wherein
the control circuit (100) highlights and displays on the GUI (300), if the communication status has a problem, the check point for the troubleshooting corresponding to the communication status.

7. The gateway device (10) according to claim 5, wherein
the control circuit (100) displays a link for displaying procedure information of the troubleshooting in the check point and displays, when the link is operated by the user, the procedure information of the troubleshooting on the GUI (300).

8. The gateway device (10) according to claim 6, wherein
the control circuit (100)
displays on the GUI (300) a communication setting button for transiting to a communication setting screen for executing the troubleshooting of the communication status,
displays, when the communication setting button is operated by the user, the communication setting screen of the target client device (20) on the GUI (300), and
executes communication settings of the target client device (20) according to an operation of the user on the communication setting screen.

9. The gateway device (10) according to claim 6,
wherein
the control circuit (100)
displays on the GUI (300) a target client device setting button for transiting to a target client device setting screen (322) for executing the troubleshooting of the target client device (20),
displays, when the target client device setting button is operated by the user, the target client device setting screen (322) of the target client device (20) on the GUI (300), and
executes device settings of the target client device (20) according to an operation of the user on the target client device setting screen (322).

10. A non-transitory computer-readable recording medium with a gateway program recorded thereon, the gateway program causing a control circuit (100) of a gateway device (10), which is connected between a server device (30) and at least one of one or more client devices (20) for the server device (30) and monitors the one or more client devices (20), the server device (30) and the one or more client devices (20) being connected to each other via a network, to execute:
displaying a GUI (300) on a display device (17), the GUI (300) displaying a troubleshooting button for starting troubleshooting of a target client device (20) that is one of the client devices (20); and
starting the troubleshooting of the target client device (20) when the troubleshooting button is operated by a user.

11. An information processing method, comprising:
when a control circuit (100) of a gateway device (10), which is connected between a server device (30) and at least one of one or more client devices (20) for the server device (30) and monitors the one or more client devices (20), the server device (30) and the one or more client devices (20) being connected to each other via a network, executes a gateway program,
displaying a GUI (300) on a display device (17), the GUI (300) displaying a troubleshooting button for starting troubleshooting of a target client device (20) that is one of the client devices (20); and
starting the troubleshooting of the target client device (20) when the troubleshooting button is operated by a user.
